# EUROPEAN PATENT APPLICATION

(11) **EP 3 815 539 A1**
(43) Date of publication of application: **05.05.2021**
(21) Application number: 20204040.8
(22) Date of filing: 27.10.2020
(51) Int. Cl.: A23L 13/00, A23B 4/023, A23B 4/03, A23L 13/70

(54) **METHOD FOR DRY-AGING GOOSE MEAT WITH SALT, GOOSE MEAT TREATED ACCORDING TO THIS METHOD AND METHOD FOR PREPARING DRY-AGED GOOSE MEAT**

(30) Priority: 28.10.2019 EP 19205618
(71) Applicant: Yarkadas, Hayati, 8808 Pfäffikon (CH)
(72) Inventor: Yarkadas, Hayati, 8808 Pfäffikon (CH)
(74) Representative: Hepp Wenger Ryffel AG

(57) **Abstract**

Method for treating goose meat, comprising the steps of: Applying a quantity of salt to all surfaces of a whole goose and performing the dry-aging of said whole goose in open air.

## Description

The present invention relates to a method for treating goose meat, and to goose meat obtained by the method disclosed herein as well as a method for preparing dry-aged goose meat.

It has been known from the state of the art that the flavour and tenderness of meat are primary criteria that the consumer takes into account when making his purchase decision.

Many of the known methods for meat ripening include the use of products to be added to the meat, such as proteins, particular enzymes or, more commonly, marinades, which typically consist of an acidic liquid, spices and oil.

For example, WO 2006/023997 A2 discloses a method for tenderizing meat which provides to treat a piece of meat with a mixture of enzymes comprising at least three different enzymes.

Further to the nature of the product to be added, such known methods are expensive or may give the meat an added taste which, for certain types of consumption, is not appropriate.

Alternatively, methods for treatment of meat have been developed which do not involve the addition of synthetic products but dry-aging. Unlike wet-aging, where the pieces of meat are sealed in plastic wrapping and aged from the inside out in a short period of a few days at most, the far more expensive dry-aging process exposes the surface of the meat to the atmosphere in an aging room and aging occurs form the outside in.

For example, US 7,998,517 B2 discloses a process for dry-aging meat that uses an enclosed, atmosphere controlled room with forced circulation, containing a stainless steel salt rack with a salt brick stack covering one wall.

However, the pieces of meat to be treated have to pass through a precise protocol, i.e. they have to be moved in position several times, which adds to the complexity and cost of the overall process.

Thus, it is the object of the present invention to remedy these and other disadvantages of the state of the art and in particular to provide goose meat which is preserved and ripened without the use of artificial preservatives or other speciality products.

The objects is achieved by a method for treating goose meat, goose meat treated according to this method, and a cooking method for said goose meat pursuant to the independent claims.

According to the present invention the method for treating goose meat comprises the steps of applying a quantity of salt comprised between 20 and 50 g per kg goose weight to all surfaces of goose meat and performing the dry-aging of said goose meat in open or controlled air at an average temperature below 5 °C and an average maximum relative humidity of 80% for a minimum of 1 week.

Preferably, the dry-aging of goose meat is performed for a period of 3 to 18 weeks, more preferably 3 to 13 weeks, most preferably 3 to 6 weeks.

This has the advantage that the tangy flavour and the tenderness of the meat are enhanced even further.

Preferably, the goose meat used in the method described herein is a whole goose.

Surprisingly and in contrast to other meats, particularly bovine meat, minimum spoilage occurs with goose meat when treated with the method according to the invention and no inedible crust is formed.

The advantage of the method is that the meat is optimally dried and preserved.

Depending on the context in which it is used, the term "goose meat" refers either to a whole goose or to parts of a whole goose, such as the breast or legs, which can be bone-in or deboned.

The terms "goose weight" and "whole goose" as used herein refer to the weight of a slaughtered goose which has been exsanguinated, plucked, eviscerated and whose neck and/or head have typically but not necessarily been removed.

If the method described herein involves portioned goose meat, the term "goose weight" shall indicate the weight of each portion or of the whole of the portions, accordingly.

The term "all surfaces" as used herein refers to all reachable surfaces and particularly the outer surface of the goose meat.

The application of salt can, for example, be done inside a tumble drum or by powder spray coating. In addition or alternatively, salt can also be applied by hand.

If a whole goose is used, the internal surfaces, such as the abdominal cavity, are preferably rubbed with salt as well.

This has the advantage that the goose dries faster due to the larger surface treated with salt.

The term "in open air" as used herein means that at least the dry-aging step of the treatment method is performed in a place which is outdoors but protected from rain and/or carnivores, and where the temperature and relative humidity of the surrounding air are substantially a maximum of 5 °C and 80% throughout the dry-aging step. In controlled air means that those conditions are artificially created in a room, which in particular has the advantage of better hygienic conditions.

Here, the temperature refers to the core temperature of goose meat, which is ultimately governed by sun exposure and the surrounding air temperature in open air. The core temperature of goose meat portions and/or a whole goose can be measured readily and reliably with a roast thermometer, for example.

Preferably, the average temperature during the dry-aging step is comprised between -10 and 0 °C because bacterial growth is effectively inhibited at these temperatures, while, at the same time, the freezing-point depression caused by the salt allows for efficient dehydration of the tissue and evaporation of water at the surface of the goose meat.

Preferably, the average relative humidity of the surrounding air is comprised between 40 and 80%, more preferably between 60 and 80%, as water will easily evaporate into the air and become water vapour in this range.

Such climatic conditions can be found at an altitude of about 1650 m above sea level during the months of November to March in the Swiss region of Lenzerheide, for example.

The advantage of performing the method described previously at an altitude of at least 1500 metres above sea level is that both the air pressure, which decreases with increasing altitude, and the wind speed or exchange of air, which typically increase with increasing altitude, noticeably support the evaporation of water and thus the drying process.

Protection of the meat from carnivores can be achieved by, for example, caging the goose meat in a suitable device such as a metal cage which, in addition to or in spite of its protective effect, also allows an essentially unimpeded exchange of air and temperature with the environment, i.e. open air. The cage can optionally be suspended at a distance from the ground.

The advantage of such a metal cage is that it is easy and inexpensive to build and that it is also substantially dimensionally stable, which makes it easier to mount or place the goose meat at the desired location.

The method can further comprise at least one of the following steps:
- cutting a whole goose in a plurality of portions
- cutting the dry-aged goose in a plurality of portions,
- rinsing the surface of dry-aged, portioned pieces with water, and
- freezing said dry-aged goose or portions of meat.

The whole goose or dry-aged whole goose can be cut by hand using a suitable cutting tool, such as a knife or scissors. Likewise, cutting can be performed by a robotic cutter using, by way of example, a circular saw or carving knife.

The advantage of cutting the goose by a user is that it can be done easily and inexpensively. The use of cutting robots has the advantage that larger quantities can be processed more efficiently.

The plurality of goose meat portions thus obtained can range in size from portions appropriate for a single meal to a boned whole goose.

Furthermore, the salt applied to the goose meat before drying can be removed with water.

Preferably, the water used for the desalination has a temperature comprised between 20 and 60 °C, more preferably between 45 and 50 °C.

This temperature range has the advantage that the solubility of the salt in water and the effectiveness of the desalination step are significantly increased. Higher temperatures than the ones provided herein are generally not desirable since the cooking processes in the meat would equally and prematurely be accelerated in this case.

Further to the rinsing step, the dry-aged whole goose or dry-aged portions of goose meat can be frozen.

Any overproduced meat can thus be preserved in an advantageous way for consumption at a later date.

Preferably, the salt used in the method is solid salt, i.e. crystalline salt. In particular, salt is not applied as a solution of salt in water such as brine.

The use of solid salt leads to an optimal drying without over salting the meat.

The salt consists essentially of a single member of the alkali metal chlorides or alkaline earth metal chlorides having the sum formulae M(+1)Cl and M(+2)Cl₂, respectively, wherein M(+1) is selected from the list Li, Na, K and M(+2) is selected from the list Mg, Ca, or a composition of said alkali metal chlorides and/or alkaline earth metal chlorides.

The term "consisting essentially of" as used herein means that the greater part of the salt or salt composition consists of one mineral, but the salt or salt composition may also contain additives customary for technological use in the field of meat products, in addition to other minerals naturally present in traces in said salts or salt compositions.

For example, the salt can be mixed with one or more iodide sources, such as sodium iodide (NaI), potassium iodide (KI), sodium iodate (NaIO₃), potassium iodate (KIO₃) or iodine (I₂), and/or one or more fluoride sources, such as sodium fluoride (NaF) or potassium fluoride (KF), and one or more anticaking agents, such as potassium hexacyanoferrate (K₄[Fe(CN)₆]; E536) or calcium phosphate (Ca₃(PO₄)₂; E341).

The addition of iodides and fluorides to table salt has the advantage that deficiency symptoms associated with them can be remedied. Furthermore, the addition of an anticaking agent can prevent the agglutination of the salt and increases its pourability.

Preferably, the salt is table salt consisting essentially of sodium chloride (NaCl).

The advantage of using table salts is that they are inexpensive, food-grade and readily available.

Preferably, the sodium chloride content in the table salt is at least 99 percent by weight.

It has been found that the grain size of the salt affects the kinetics of the drying process. Preferably, the salt features an average grain size comprised between 0.1 and 3.0 mm, more preferably between 0.1 and 0.7 mm.

Finer-grained salts have the advantage over coarser-grained salts that they can be applied more uniformly to the surface of the goose meat. Also, the larger surface area of finely-grained salts enables a higher weight loss per unit of time and therefore faster drying of the goose meat.

The term "weight loss" as used herein refers to the reduction in weight caused by the removal of water from the tissue by salt and/or the drying step.

Typically, the weight loss measured at the end of the drying step is 10 to 20 percent of the initial goose weight and depends predominantly on the factors of salt quantity, grain size, drying time and the ambient conditions.

The goose meat can be a fresh or frozen.

The term "fresh" as used herein refers to goose meat which was kept refrigerated after slaughter for reasons of food hygiene but the core temperature of which has not fallen below 0 °C before the start of the treatment method described herein.

Preferably, the goose meat is subjected to the treatment method described herein directly after slaughter. This way, no refrigeration or intermediate storage capacity is required, which has an advantageous impact on costs.

The term "frozen" as used herein refers to goose meat the core temperature of which, after falling below 0 °C, has not substantially exceeded this temperature before the start of the treatment method described herein.

The use of frozen goose meat has the advantage that the method can be carried out independently of the availability of freshly slaughtered geese, i.e. by using readily available portioned goose meat or whole geese from the supermarket or specialist shop.

The object is further achieved by a method for preparing goose meat treated by a method as previously described, which comprises the step of cooking the goose meat in boiling water for a lapse of time comprised between 2 and 5 hours, preferably between 3 and 4 hours.

The term "cooking" as used herein means that the meat is immersed and covered with water which is held substantially at its boiling point at a certain altitude above sea level, i.e., usually but not necessarily, between 90 and 100 °C.

It is important that the meat is completely covered with water to allow water to be absorbed into the previously dehydrated meat. The water level should preferably be 2 to 3 cm higher than the meat level to ensure that the meat remains covered with water throughout the cooking process, even if the cooking vessel is not closed.

Preferably, onions and garlic are added to the cooking water but other or completely different vegetables and/or herbs can be used as desired.

The addition of onions and garlic to the cooking water has the advantage that valuable ingredients such as essential oils get into the cooking water and the goose boiling in it. Furthermore, these ingredients can be added to the cooking water before, at the same time or after the addition of the meat.

The cooked pieces of meat can be placed in a roaster, preferably with the skin facing the heat source, and grilled in an oven at an air temperature comprised between 180 °C and 240 °C for preferably 10 to 15 minutes.

This makes the skin, which was previously soaked with water, crispy and delicious.

The remainder and any juice leaking from the meat can be used to make a sauce.

Surprisingly, it has been found that the method for preparing goose meat disclosed herein yields identical results in terms of taste and tenderness irrespective of whether the goose meat is prepared immediately after dry-aging or only after several months of storage in a frozen state.

The use of frozen goose meat dry-aged according to the method as previously described has the advantage that the cooking method can be carried out regardless of the time of year and independent of the availability of newly dry-aged geese.

The object is further achieved by the goose meat obtained by the method of treating goose meat as previously described.

The dry-aged goose meat and the goose meat after cooking can be characterized, for example, by instrumental texture analysis. Texture analyzers are electronically controlled universal testing machines that use a force sensor to record the force necessary in order to travel a defined path in a given time at a given speed, or to penetrate into a sample with a defined force. Texture analyzers or penetrometers serve to examine critical properties of various foods by measuring the necessary forces via a measuring element pressed into the sample. Depending on the composition and structure of the molecules in the products, specific textures result that mean different physical properties. Textures determine the fragility, hardness, elasticity, adhesiveness, stretchability or chewability of foods.

Examples for equipment that simulates the bite into foods and thus provides information about the bite behaviour as well as the crispiness and firmness include the Kramer shear cell, the Warner-Bratzler shear cell (WBS) and the OTMS cell (Ottawa Texture Measuring System).

The use of texture analyzers has the advantage that these devices are readily available and provide objective measurements. Furthermore, they can be used easily and reliably by trained personnel in quality control.

The invention is further explained in more detail by means of figures, in which like reference numerals are used to refer to the same or similar elements.
Figure 1: Schematic diagram of the method for treating goose meat disclosed herein.
Figure 2: Schematic diagram of the cooking method for preparing goose meat disclosed herein.

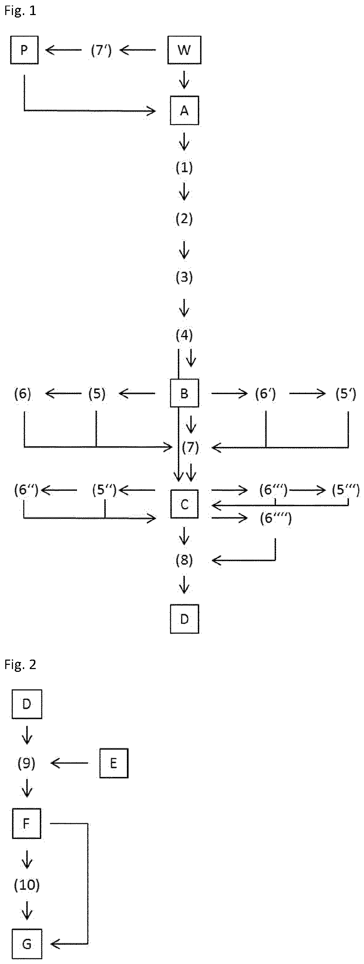

Figure 1 sketches the method for treating goose meat as described previously starting from a whole goose (W), which can optionally be cut (7') into portions (P) to arrive at the goose meat (A) to be used in the method described hereinbefore. The goose meat (A) is first weighed (1) and then rubbed with salt (2) in all accessible places. The salted goose is then placed outside or in controlled conditions to dry (3). After drying, the goose is weighed again and the weight loss is calculated (4) from the difference between the weights before and after drying relative to the initial weight. Depending on whether the treatment was performed on portions of goose meat (P) or a whole goose (W), the dry-aged goose meat can be further processed after the weight loss determination step (4) as follows: Fatty tissue can be removed (5) from the dry-aged whole goose (B) prior to the cutting operation (7). The dry-aged goose (B), from which fatty tissue has been removed (5), can also be frozen and defrosted (6) prior to further processing by cutting (7). Another option is to remove the fatty tissue (5') from a dry-aged whole goose (B) which has been frozen and defrosted (6') before. Analogously, fatty tissue can be removed (5") from the dry-aged portions of goose meat (C) and the resulting goose meat can be frozen and defrosted (6") prior to further processing. If processing at a later date is desired or necessary, the dry-aged portions of goose meat (C) can first be frozen and defrosted (6"') before the optional removal of fatty tissue (5"') and further processing. In any case, the dry-aged portions of goose meat (C) thus obtained can subsequently be rinsed (8) without any additional intermediate step or be frozen and defrosted (6"") prior to the rinsing operation (8). The rinsed portions of goose meat (D) can be used in the method for preparing goose meat as previously described and illustrated in Fig. 2.

Figure 2 sketches the method for preparing goose meat obtained by the previously described method. The rinsed portions of goose meat (D) are added into a cooking vessel comprising boiling water. Optionally, further ingredients may be added to the cooking water from the beginning or until the end of the cooking step (9). The cooked goose meat portions (F) are removed from the cooking water to obtain the meat to be served (G). Optionally, the goose can be grilled (10) before serving to obtain crispy skin.

Hereinafter, the present invention is described in more detail and specifically with reference to the examples, which however are not intended to limit the present invention. Unless otherwise specified, the quantities indicated herein refer to a single goose and scale approximately linearly with the number of geese to be processed. Percentages refer to weight percent, unless otherwise stated.

### Example 1

A whole, gutted Swiss goose (W), which was previously frozen, was weighed (1) and the weight was noted (4.1 kg). The goose was rubbed (2) with a total of 150 g sale da cucina in all accessible places and then hung outside (3) in a metal cage protected from rain. After 3 weeks, the goose was removed from its drying location and its weight was determined at 3.8 kg, corresponding to a weight loss (4) of approximately 7%.

The dry-aged goose (B) thus obtained was cut (7) in a plurality of portions (C), which were placed in a 45 °C water bath for 15 min for desalting (8). No fatty tissue was removed in the process. Subsequently, the portioned and rinsed pieces of meat (D) were placed in a saucepan together with 120 g of garlic and 700 g of onions (E), covered with water and cooked (9) for 3.6 h. The cooked pieces of goose meat (F) were then removed from the saucepan and grilled (10) in an oven with the skin facing the heat source for 12 min. The resulting ready-to-serve goose meat (G) was juicy and rich in taste with crispy skin.

### Example 2

The weight of a whole, gutted French goose (W) was determined (1) at 2.8 kg. The goose was rubbed (2) with a total of 70 g Sel des Alpes in all accessible places and then hung outside (3) in a metal cage protected from rain. After 13 weeks, the goose was removed from its drying location and its weight was determined at 2.3 kg, corresponding to a weight loss (4) of approximately 18%.

A total of 100 g of fatty tissue was removed (5") from the dry-aged goose (B), which was then cut (7) in a plurality of portions (C), which were placed in a 50 °C water bath for 30 min for desalting (8). Subsequently, the portioned and rinsed pieces of meat (D) were placed in a saucepan together with 100 g of garlic and 530 g of onions (E), covered with water and cooked (9) for 3.3 h. The cooked pieces of goose meat (F) were then removed from the saucepan and grilled (10) in an oven with the skin facing the heat source for 12 min. The resulting ready-to-serve goose meat (G) was juicy and rich in taste with crispy skin.

## Claims

1. Method for treating goose meat, **characterized in that** it comprises the steps of
- Applying a quantity of salt comprised between 20 and 50 g per kg goose weight to all surfaces of goose meat (A) ;
- Performing the dry-aging of said goose meat (A) in open or controlled air at an average temperature below 5 °C, preferably at an average temperature comprised between -10 and 0°C, and an average maximum relative humidity of 80%, preferably at an average relative humidity comprised between 40 and 80%, more preferably between 60 and 80%, for a minimum of 1 week, preferably 3 to 18 weeks, more preferably 3 to 13 weeks, most preferably 3 to 6 weeks.

2. Method according to claim 1, **characterized in that** the goose meat is a whole goose (W).

3. Method according to claims 1 or 2, **characterized in that** it comprises at least one of the steps of
- Cutting a whole goose (W) in a plurality of portions (P);
- Cutting a dry-aged goose (B) in a plurality of portions (C);
- Rinsing the surface of dry-aged, portioned pieces (C) with water, preferably with water at a temperature comprised between 20 and 60 °C, more preferably between 45 and 50 °C;
- Freezing said dry-aged goose (B) or portions (C) of meat;

4. Method according to any one of claims 1 to 3, **characterized in that** solid salt is applied to all surfaces of the goose meat.

5. Method according to any one of claims 1 to 4, **characterized in that** said salt is table salt consisting essentially of sodium chloride, preferably the sodium chloride content in the table salt is at least 99 percent by weight.

6. Method according to claim 3, **characterized in that** the salt has a grain size comprised between 0.1 and 3 mm, preferably between 0.1 and 0.7 mm.

7. Method according to any one of claims 1 to 6, **characterized in that** said whole goose (W) is a defrosted frozen goose.

8. Goose meat treated according to the method of any one of claims 1 to 7.

9. Method for preparing goose meat treated by a method according to any one of claims 1 to 7, **characterized in that** it comprises the step of cooking said goose meat in boiling water for a lapse of time comprised between 2 and 5 hours, preferably between 3 and 4 hours.
